# DEMANDE DE BREVET EUROPEEN

(11) **EP 1 689 158 A1**
(43) Date de publication de la demande: **09.08.2006**
(21) Numéro de dépôt: 06300091.3
(22) Date de dépôt: 31.01.2006
(51) Int. Cl.: H04M 11/04, H04M 11/00, H04M 3/42

(54) **Procédé de configuration d'un terminal fixe**

(30) Priorité: 04.02.2005 FR 0550319
(71) Demandeur: Sagem Communication, 75512 Paris Cedex 15 (FR)
(72) Inventeur: Kanaan, Nadi, 75016 Paris (FR); Leloup, Philippe, 94130 Nogent sur Marne (FR); Rotter, Harald, 1170 Wien (AT)
(74) Mandataire: Camus, Olivier Jean-Claude

(57) **Abrégé**

Dans l'invention, on propose une solution pour communiquer des paramètres de configuration (204), associés à un réseau distant (102), à des terminaux fixes (100) sans que l'utilisateur ait à saisir lesdits paramètres. A cet effet, on propose, dans l'invention, de transmettre directement au terminal fixe, via le réseau téléphonique commuté (101) ou le réseau numérique à intégration de services, lesdits paramètres de configuration depuis le réseau distant. On évite ainsi à l'utilisateur des manipulations fastidieuses, notamment dans le cas de terminaux présentant peu de touches, manipulations qui risquent par ailleurs d'être entachées d'erreurs de saisie. Dans un exemple de mise en oeuvre du procédé selon l'invention, les paramètres sont transmis depuis le réseau distant vers le terminal fixe au moyen d'un message de type SMS.

## Description

### DOMAINE TECHNIQUE DE L'INVENTION

La présente invention a pour objet un procédé de configuration d'un terminal fixe, ledit terminal étant apte à communiquer, par l'intermédiaire du Réseau Téléphonique Commuté (RTC) ou du Réseau Numérique à Intégration de service (RNIS), avec un ensemble d'équipements informatiques constituant un réseau géré par un opérateur. L'invention a notamment pour but de permettre une mise à jour, ou éventuellement une initialisation, de paramètres de configuration qui doivent être mémorisés dans le terminal fixe pour que celui-ci puisse entrer en communication et/ou échanger des informations avec un réseau considéré.

Préalablement à la description de l'invention en elle-même est proposé, afin de fixer le vocabulaire employé, un lexique relatif à différents termes qui seront employés ultérieurement :
- réseau informatique: ensemble d'ordinateurs, associés à leurs éventuels périphériques qui y sont connectés, reliés ensemble par des canaux électroniques de communication qui permettent un échange d'informations ;
- réseau distant : réseau accessible au moyen d'un terminal fixe via le réseau téléphonique commuté ;
- serveur : équipement informatique de type ordinateur détenant un certain nombre de ressources particulières qui sont mises à disposition d'autres équipements informatiques par l'intermédiaire d'un réseau ;
- serveur de service d'accès distant, ou serveur RAS (Remote Access Service en langue anglaise) : Serveur équipé d'un ensemble d'applications logicielles définissant un service qui permet à un équipement distant de se connecter à un réseau;
- serveur applicatif : serveur dédié à une tâche particulière ;
- serveur SMSC (Short Message Service Center en langue anglaise pour centre de service de messages courts) : serveur permettant le transfert de messages de type SMS ;
- message SMS (Short Message Service en anglais pour "service de message court") : court message, pouvant notamment contenir une information textuelle, qui peut être envoyé par l'intermédiaire d'un serveur SMSC vers un terminal destinataire ;
- serveur MMSC (Multimedia Message Service Center en langue anglaise pour centre de service de messages multimédia) : serveur permettant le transfert de messages de type MMS ;
- message MMS (Multimedia Message Service en langue anglaise, pour "service de message multimédia") : message multimédia, pouvant notamment incorporer du texte, de la vidéo, du son... qui peut être envoyé par l'intermédiaire d'un serveur MMSC vers un terminal destinataire ;
- terminal fixe : équipement électronique présentant une quelconque fonctionnalité spécifique (par exemple une fonctionnalité d'impression, une fonctionnalité de décodage de signaux de télévision, une fonctionnalité d'émission et/ou de réception de fax, une fonctionnalité de téléphonie selon la norme DECT...) et apte à communiquer avec un réseau distant par l'intermédiaire de liaisons câblées auxquelles il est, dans un état de fonctionnement habituel, connecté; un terminal fixe est utilisé en étant branché sur l'alimentation secteur ; il est donc destiné à être utilisé, de façon prolongée, dans un environnement fixe constant, domestique ou professionnel. Un terminal fixe tel que ceux intervenant dans le procédé selon l'invention peut être un terminal large bande, c'est à dire apte à échanger des informations à un débit supérieur ou égal à 1,544 Mbit/s (MégaBits par seconde), ou un terminal bande étroite.
- URL : (Uniform Resource Locator en langue anglaise pour localisateur uniforme de ressource). Il s'agit dune méthode d'accès à un document distant sur le réseau Internet.

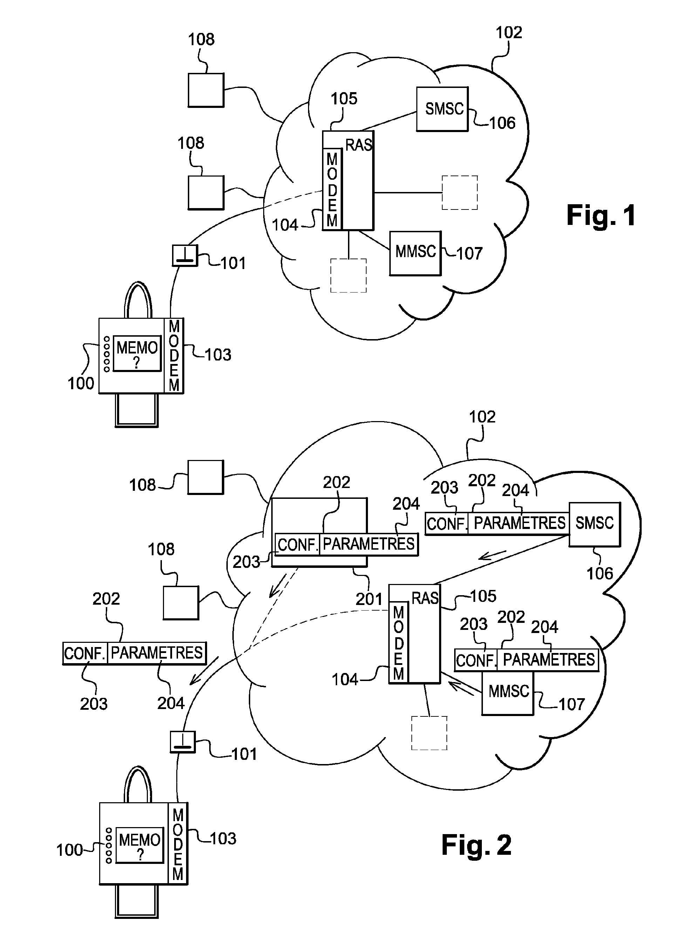

Le domaine de l'invention est, d'une façon générale, celui des réseaux informatiques au sens large de leur définition. Une représentation schématique d'un terminal fixe accédant à un réseau est représenté à la figure 1. Sur cette figure, un terminal fixe 100 est équipé de moyens de connexion au réseau téléphonique commuté 101. Pour accéder à un réseau distant 102 via le réseau téléphonique commuté 101, ou le RNIS, le terminal fixe 100 doit être équipé de moyens de connexion sur le réseau téléphonique commuté. Ces moyens de connexion sont typiquement constitués par un modem 103, qui peut être soit un modem externe au terminal 100, soit un modem interne se présentant sous la forme d'une carte électronique.

Pour établir une connexion entre le terminal fixe 100 et le réseau distant 102, le modem 103 doit appeler un modem 104 d'un serveur de type RAS 105 du réseau 102. Dans la pratique, le serveur RAS 105 peut comporter une pluralité de modems. Le terminal fixe 100 doit donc être en possession d'un premier paramètre de configuration, à savoir le numéro du serveur RAS, pour établir une connexion avec le réseau distant 102. Une fois que les modems 103 et 104 ont établi une communication, définissant ainsi un canal physique de communication en s'accordant sur une modulation à utiliser pour l'échange d'informations, le terminal fixe doit, dans la plupart des cas, s'identifier auprès du réseau 102. A cet effet, le terminal fixe 100 communique au réseau 102 un identifiant (ou login) et/ou un mot de passe, qui constituent également des paramètres de configuration, appelés paramètres PPP en référence au protocole éponyme.

Outre le serveur RAS 105, le réseau 102 peut comporter une pluralité d'autres serveurs, notamment un serveur SMSC 106 et un serveur MMSC 107 connectés, éventuellement par l'intermédiaire d'autres équipements informatiques, au serveur RAS 105. Pour accéder au serveur SMSC 106 et MMSC 107, le terminal 100 doit, dans la plupart des cas, disposer d'autres paramètres de configuration qui sont respectivement un numéro d'appel du serveur SMSC et un numéro d'appel du serveur MMSC.

Le terminal fixe 100 connecté au réseau distant 102 constitue un client du réseau 102. Le réseau 102 peut comporter une pluralité d'autres clients 108.

### ARRIERE-PLAN TECHNOLOGIQUE DE L'INVENTION

Comme on vient de le montrer, un terminal fixe qui souhaite se connecter à un réseau distant doit pouvoir posséder un certain nombre de paramètres de configuration. Ces paramètres doivent être mémorisés dans le terminal fixe considéré. Dans l'état de la technique, les paramètres de configuration sont portés à la connaissance de l'utilisateur, par différents moyens ; c'est ensuite à l'utilisateur de saisir les paramètres de configuration dans le terminal fixe. Un problème se pose alors : l'utilisateur peut se tromper dans la saisie des paramètres de configuration ; une difficulté supplémentaire apparaît par ailleurs avec certains types de terminaux fixes, à savoir les terminaux fixes disposant d'une interface homme-machine réduite, qui ne présente qu'un nombre de touches limité - par exemple inférieur à 10- pour saisir des informations. C'est le cas notamment de décodeurs de télévision numérique, ou de certaines imprimantes, par exemple le poste nommé Photo Easy Printer MMS du déposant. Il faut alors accéder à différents menus pour saisir les paramètres de configuration, ce qui est particulièrement contraignant pour l'utilisateur.

### DESCRIPTION GENERALE DE L'INVENTION

Le procédé selon l'invention propose une solution aux problèmes et inconvénients qui viennent d'être exposés. Dans l'invention, on propose une solution pour communiquer des paramètres de configuration à des terminaux fixes sans que l'utilisateur ait à saisir lesdits paramètres. A cet effet, on propose, dans l'invention, de transmettre directement à un terminal fixe, via le réseau téléphonique commuté ou le réseau numérique à intégration de services, des paramètres de configuration associés à un réseau distant depuis ledit réseau distant, sans que l'utilisateur est à saisir les paramètres. On évite ainsi à l'utilisateur des manipulations fastidieuses, notamment dans le cas de terminaux présentant peu de touches, manipulations qui risquent par ailleurs d'être entachées d'erreurs de saisie. Dans un exemple de mise en oeuvre du procédé selon l'invention, les paramètres sont transmis depuis le réseau distant vers le terminal fixe au moyen d'un message de type SMS. D'autres types d'encapsulation peuvent cependant être utilisées, notamment des encapsulations conformes à des protocoles Internet (TCP/IP ; UDP/IP ; FTP/IP...).

L'invention concerne donc essentiellement un procédé de configuration d'un terminal fixe apte à communiquer sur un réseau distant géré par un opérateur, ledit terminal présentant des moyens de connexion au réseau téléphonique commuté ou au réseau numérique à intégration de services, caractérisé en ce qu'il comporte notamment l'étape consistant à recevoir, au sein du terminal fixe et depuis le réseau distant et via le réseau téléphonique commuté ou le réseau numérique à intégration de services, au moins un paramètre de configuration intervenant dans une opération de connexion au - et/ou de communication avec le - réseau distant.

Le procédé selon l'invention peut comporter, en plus des caractéristiques principales qui viennent d'être mentionnées, une ou plusieurs caractéristiques supplémentaires suivantes :
- les paramètres de configuration sont envoyés du réseau distant vers le terminal fixe, via le réseau téléphonique commuté ou le réseau numérique à intégration de services, au moyen d'un message de configuration de type SMS;
- le message de configuration comporte un en-tête spécifique pour indiquer au terminal fixe qu'il comporte au moins un des paramètres de configuration ;
- un des paramètres de configuration reçu est un numéro d'un serveur de service d'accès distant appartenant au réseau distant ;
- un des paramètres de configuration reçu est une information d'identification du terminal sur le réseau distant, information d'identification constituée d'un identifiant et/ou d'un mot de passe ;
- un des paramètres de configuration reçu est un numéro de serveur SMSC du réseau distant ;
- un des paramètres de configuration reçu est un numéro de serveur MMSC du réseau distant ;
- un des paramètres de configuration reçu est un numéro d'appel d'un serveur d'accès au réseau Internet ;
- un des paramètres de configuration reçu est un numéro d'appel d'un serveur de courriers électroniques ;
- un des paramètres de configuration reçu est un numéro d'appel d'un serveur de gestion de répertoires d'adresses ;
- un des paramètres de configuration reçu est une information relative au verrouillage du terminal fixe sur le réseau distant considéré;
- le procédé comporte l'étape supplémentaire consistant à composer, au moyen du terminal fixe, un numéro spécifique de l'opérateur pour provoquer l'envoi des paramètres de configuration ;
- l'étape supplémentaire consistant à composer, au moyen du terminal fixe, un numéro spécifique de l'opérateur pour provoquer l'envoi des paramètres de configuration est mise en oeuvre pour un premier enregistrement de paramètres de configuration dans le terminal fixe ;
- le procédé comporte l'étape supplémentaire consistant à transmettre automatiquement, depuis un serveur spécifique du réseau distant, les paramètres de configuration ;
- le message de configuration est élaboré au moyen d'un serveur SMSC du réseau distant ;
- le procédé comporte l'étape supplémentaire consistant à émettre depuis le terminal fixe vers le réseau distant, via le réseau téléphonique commuté ou le réseau numérique à intégration de services, un message d'acquittement de réception des paramètres de configuration après réception desdits paramètres ; le message d'acquittement peut par exemple un message de type SMS, dont l'émission ne nécessite pas l'intervention d'un utilisateur ;
- le procédé comporte l'étape supplémentaire consistant à proposer à un utilisateur du terminal fixe, une fois les paramètres de configuration reçus par le terminal fixe, un enregistrement des paramètres de configuration dans un module de mémoire du terminal fixe;
- le procédé comporte l'étape supplémentaire consistant à émettre, le cas échéant, depuis le terminal fixe vers le réseau distant, via le réseau téléphonique commuté ou le réseau numérique à intégration de services, un message d'acquittement d'enregistrement des paramètres de configuration ;
- le terminal fixe est de type imprimante.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation de principe d'un réseau distant communiquant avec un terminal fixe ;
- à la figure 2, une représentation schématique d'un exemple de mise en oeuvre du procédé selon l'invention ;
- à la figure 3, un organigramme décrivant un exemple de mise en oeuvre du procédé selon l'invention.

### DESCRIPTION DES FORMES DE REALISATION PREFEREES DE L'INVENTION

Les différents éléments apparaissant sur différentes figures auront conservé, sauf précision contraire, les mêmes références.

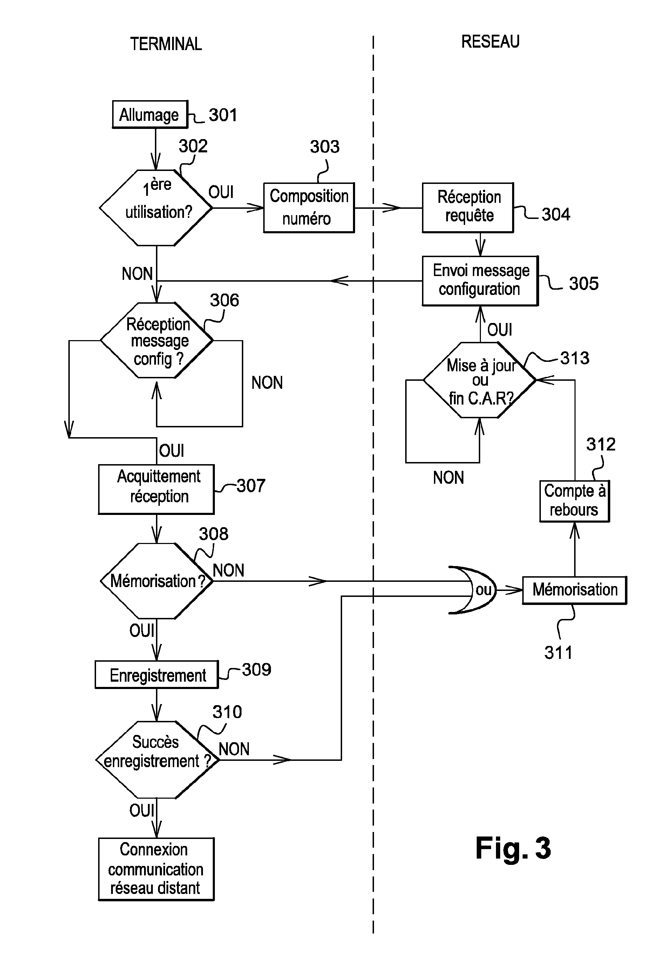

Les figures 2 et 3, qui illustrent un exemple de mise en oeuvre du procédé selon l'invention, sont décrites conjointement. A la figure 2, on retrouve les principaux éléments déjà présents sur la figure 1, à savoir le terminal 100 et son modem 103, le Réseau Téléphonique Commuté 101, et le réseau distant 102. Ce dernier comporte toujours notamment le serveur RAS 105 équipé notamment du modem 104, le serveur SMSC 106 et le serveur MMSC 107 ; le réseau distant 102 peut toujours être connecté à d'autres clients 108. Dans d'autres exemples de mise en oeuvre du procédé selon l'invention, le RTC est remplacé par le RNIS. Selon l'invention, le terminal fixe intervenant dans le procédé décrit peut être par exemple de type imprimante, fax, décodeur de télévision numérique, téléphone de type DECT associé à sa base... Le terminal fixe peut être un terminal large bande, c'est à dire apte à échanger des informations à un débit supérieur ou égal à 1,544 Mbit/s (MégaBits par seconde), ou un terminal bande étroite.

Une première étape 301 de l'exemple décrit consiste en une opération d'allumage, ou mise sous tension, du terminal fixe 100. On passe alors immédiatement à une étape de décision 302 dans laquelle on vérifie s'il s'agit d'une échéance de mise à jour des paramètres telle qu'une première utilisation du terminal 100, et notamment une première utilisation en tant que client du réseau distant 102. Dans l'affirmative, l'utilisateur est invité par le terminal 100, dans une étape 303, à composer un numéro pour entrer en contact avec le réseau distant 102. Le numéro à composer peut par exemple correspondre à un appui répété sur une même touche de l'interface homme-machine du terminal 100, notamment dans le cas où cette interface est restreinte. Une requête est ainsi reçue, dans une étape 304, par le réseau distant 102 et après passage par le réseau RTC 101. La requête peut par exemple être reçue, au sein du réseau distant 102, par un serveur d'applications 201, dont le rôle est d'élaborer un message de configuration 202. Le message de configuration 202 peut alors être envoyé, dans une étape 305, au terminal fixe 100, toujours par l'intermédiaire du réseau RTC 101.

Si la réponse à l'étape de décision 302 est négative, c'est à dire si le terminal fixe 100 s'est déjà préalablement connecté au réseau distant 102, ou suite à l'étape 305 d'envoi du message de configuration 202, on passe au sein du terminal fixe 100, à une étape de décision 306 dans laquelle le terminal 100 teste s'il reçoit un message de configuration. Un message de configuration peut notamment être identifiable par un en-tête spécifique 203 qui le distingue des autres types de messages que le terminal peut recevoir depuis le réseau RTC. Tant que le terminal 306 ne reçoit pas de message de configuration, il conserve un fonctionnement habituel, utilisant les paramètres de configuration qu'il a préalablement mémorisés pour se connecter au réseau distant 102 et communiquer avec ce dernier. Il demeure cependant en permanence prêt à recevoir un nouveau message de configuration.

Lorsque le terminal 100 reçoit un message de configuration, il élabore, dans une étape 307, un message d'acquittement de réception d'un message de configuration. Dans une étape suivante de décision 308, on propose à l'utilisateur de mémoriser des paramètres de configuration 204 qu'il a reçus dans le message de configuration 202. Une telle proposition peut par exemple être effectuée par l'affichage d'un message sur un écran de contrôle du terminal fixe 100. L'utilisateur peut choisir de répondre positivement ou négativement à cette proposition.
Dans la négative, le message d'acquittement élaboré dans l'étape 307 est transmis au réseau distant 102, via le réseau RTC, et le processus de configuration du terminal 100 s'arrête là ; le terminal fixe 100 ne dispose alors pas des paramètres de configuration en vigueur au sein du réseau distant 102.
Dans l'affirmative, on procède, dans une étape 309, à une tentative d'enregistrement des nouveaux paramètres de configuration dans une mémoire non volatile du terminal fixe 100. Une étape de décision 310 intervient alors dans laquelle le terminal 100 vérifie que l'étape d'enregistrement 309 a été réalisée avec succès. Dans la négative, un message informant d'un échec de l'enregistrement est envoyé au réseau distant 102 via le réseau RTC, et le processus de configuration du terminal 100 s'arrête là ; le terminal fixe 100 ne dispose alors pas des paramètres de configuration en vigueur au sein du réseau distant 102.

Lorsque le réseau distant 102 reçoit le message d'échec d'enregistrement, ou le message d'acquittement de réception qui n'est transmis, comme on l'a vu, que lorsque l'utilisateur a refusé l'enregistrement des nouveaux paramètres de configuration, il procède, dans une étape 311, à une opération de mémorisation qui permet au réseau distant 102 de conserver une information relative au fait que le terminal fixe 100 ne dispose pas des derniers paramètres de configuration qui peuvent lui être utiles pour se connecter à -et/ou communique avec - lui. Il déclenche alors, dans une étape 312, un compte à rebours.

Dans un autre exemple de mise en oeuvre, le terminal 100 transmet une information pour indiquer que les nouveaux paramètres ont bien été reçus et mémorisés. Une telle information est mémorisée au sein du réseau distant 102, un compte à rebours n'étant déclenché qu'en l'absence de réception d'une telle information après un envoi par le serveur distant 102 des paramètres de configuration.

Lorsque le compte à rebours est arrivé à terme, ou lorsque le réseau distant 102 a procédé à une modification d'un ou plusieurs paramètres de configuration, on exécute, à l'issue d'une étape de décision 313 vérifiant l'occurrence d'un des ces deux événements, l'étape 305 d'envoi d'un message de configuration. Le procédé est alors repris comme précédemment décrit à la suite de l'étape 305. Tant que le compte à rebours n'est pas arrivé à terme et qu'aucune mise à jour des paramètres de configuration n'est intervenue, le réseau distant n'envoie pas de message de configuration au terminal 100.

Le compte à rebours peut également être utilisé pour l'envoi automatique, éventuellement périodique, des paramètres de configuration, l'initialisation du compte à rebours étant alors être provoquée, par exemple, par la simple détermination de nouveaux paramètres de configuration au sein du réseau distant 102.

Lorsqu'à l'issue de l'étape de décision 310, il s'avère que l'enregistrement, au sein du terminal 100, des paramètres de configuration est un succès, le terminal peut entreprendre, dans une étape 314, toute opération de connexion et/ou de communication avec le réseau distant 102.

Les paramètres de configuration qui sont envoyés dans les messages de configuration au cours de l'étape 305 peuvent être notamment un ou plusieurs paramètres parmi les suivants :
- un numéro d'appel du serveur RAS 105 ;
- une information d'identification du terminal fixe 100, comportant un identifiant et/ou un mot de passe ;
- un numéro d'appel du serveur SMSC 106 ; le numéro d'appel du serveur SMSC peut être notamment une nouvelle définition des ports d'accès des SMS, c'est à dire soit un numéro utilisé pour l'émission de messages à partir de ce serveur, soit un numéro utilisé pour la réception de messages à partir de ce serveur, ou la concaténation de ces deux numéros ;
- un numéro d'appel du serveur MMSC ; le numéro d'appel du serveur MMSC peut être une nouvelle définition des ports d'accès source et destination des MMS, c'est à dire soit un numéro utilisé pour l'émission de messages à partir de ce serveur, soit un numéro utilisé pour la réception de messages à partir de ce serveur ; le numéro d'appel peut également consister en l'URL destinataire du serveur MMMSC, ou en un identifiant, ou encore en un mot de passe susceptibles d'intervenir dans des échanges de données entre le terminal fixe et le serveur MMSC ; le numéro d'appel du serveur MMSC peut également consister en la concaténation d'au moins deux des numéros cités dans ce paragraphe ;
- un numéro d'appel d'un serveur d'accès au réseau Internet (IS Provider en langue anglaise); le numéro d'appel du serveur d'accès au réseau Internet peut être le numéro à composer pour atteindre ledit serveur, ou consister en un identifiant, ou encore en un mot de passe, associé au serveur d'accès au réseau Internet ; le numéro d'appel du serveur d'accès au réseau Internet peut également consister en la concaténation d'au moins deux des numéros cités dans ce paragraphe ;
- un numéro d'appel d'un serveur de courriers électroniques (EMAIL Provider en langue anglaise); le numéro d'appel du serveur de courriers électroniques peut être une nouvelle définition des ports d'accès source et destination des courriers électroniques concernant le terminal fixe considéré, c'est à dire soit un numéro utilisé pour l'émission de courriers électroniques à partir de ce serveur, soit un numéro utilisé pour la réception de courriers électroniques à partir de ce serveur ; le numéro d'appel peut également consister en un identifiant, ou encore en un mot de passe susceptibles d'intervenir dans des échanges de courriers électroniques entre le terminal fixe et le serveur de courriers électroniques; le numéro d'appel du serveur de courriers électroniques peut également consister en la concaténation d'au moins deux des numéros cités dans ce paragraphe ;
- un numéro d'appel d'un serveur de gestion de répertoires d'adresses (NAB Provider en langue anglaise); le numéro d'appel du serveur de gestion de répertoires d'adresses peut être une nouvelle définition du numéro à composer pour atteindre ce serveur ; le numéro d'appel peut également consister en l'URL destinataire du serveur de gestion de répertoires, en un identifiant, ou encore en un mot de passe susceptibles d'intervenir dans des échanges de données entre le terminal fixe et le serveur de gestion de répertoires d'adresses; le numéro d'appel du serveur de gestion de répertoires d'adresses peut également consister en la concaténation d'au moins deux des numéros cités dans ce paragraphe ;
- une information relative au verrouillage du terminal fixe considéré sur un premier réseau distant donné, ladite information pouvant notamment être une autorisation de déverrouillage du terminal fixe considéré vis à vis du premier réseau distant.

Avantageusement, dans le cas d'une mise à jour de ces paramètres par le réseau distant 102, ils sont envoyés, via le réseau RTC 101, sous la forme d'un message de type SMS émis depuis le serveur SMSC 106 du réseau distant 102, la plupart des terminaux fixes concernés par la présente invention, c'est à dire les terminaux fixes aptes à communiquer sur un réseau distant, étant capables d'interpréter le format des messages SMS. Par exemple, on prévoit, dans l'invention, d'utiliser pour la transmission d'un message SMS de configuration un ou plusieurs champs particuliers existant dans la structure des messages SMS, notamment un ou plusieurs champs connus de l'homme du métier sous le nom de champ d'extension libre.

Dans un autre exemple d'application, les paramètres de configuration, peuvent être envoyés sous la forme d'un message de type MMMS, ou selon le protocole SNMP ( pour Simple Network Management Protocol en langue anglaise), qui est un protocole d'administration distante ou locale, par exemple sur des réseaux de type Internet mais pas seulement, connu de l'homme du métier.

## Revendications

1. Procédé de configuration d'un terminal fixe (100) apte à communiquer sur un réseau distant (102) géré par un opérateur, ledit terminal présentant des moyens de connexion au réseau téléphonique commuté (101) ou au réseau numérique à intégration de services, et une interface homme-machine réduite présentant un nombre de touches inférieur à dix, **caractérisé en ce qu'**il comporte notamment l'étape consistant à recevoir, au sein du terminal fixe et depuis le réseau distant et via le réseau téléphonique commuté ou via le réseau numérique à intégration de services, au moins un paramètre de configuration (204) intervenant dans une opération de connexion au - et/ou de communication avec le - réseau distant.

2. Procédé selon la revendication précédente **caractérisé en ce que** les paramètres de configuration sont envoyés du réseau distant vers le terminal fixe, via le réseau téléphonique commuté ou le réseau numérique à intégration de services, au moyen d'un message de configuration de type SMS.

3. Procédé selon la revendication précédente **caractérisé en ce que** le message de configuration comporte un en-tête spécifique (203) pour indiquer au terminal fixe qu'il comporte au moins un des paramètres de configuration.

4. Procédé selon l'une au moins des revendications précédentes **caractérisé en ce que** un des paramètres de configuration reçu est un numéro d'un serveur de service d'accès distant (105) appartenant au réseau distant.

5. Procédé selon l'une au moins des revendications précédentes **caractérisé en ce que** un des paramètres de configuration reçu est une information d'identification du terminal sur le réseau distant, information d'identification constituée d'un identifiant et/ou d'un mot de passe.

6. Procédé selon l'une au moins des revendications précédentes **caractérisé en ce que** un des paramètres de configuration reçu est un numéro de serveur SMSC (106) du réseau distant.

7. Procédé selon l'une au moins des revendications précédentes **caractérisé en ce que** un des paramètres de configuration reçu est un numéro de serveur MMSC (107) du réseau distant.

8. Procédé selon l'une au moins des revendications précédentes **caractérisé en ce que** un des paramètres de configuration reçu est un numéro d'appel d'un serveur d'accès au réseau Internet.

9. Procédé selon l'une au moins des revendications précédentes **caractérisé en ce que** un des paramètres de configuration reçu est un numéro d'appel d'un serveur de courriers électroniques.

10. Procédé selon l'une au moins des revendications précédentes **caractérisé en ce que** un des paramètres de configuration reçu est un numéro d'appel d'un serveur de gestion de répertoires d'adresses.

11. Procédé selon l'une au moins des revendications précédentes **caractérisé en ce que** un des paramètres de configuration reçu est une information relative au verrouillage du terminal fixe sur le réseau distant (102)..

12. Procédé selon l'une au moins des revendications précédentes **caractérisé en ce qu'**il comporte l'étape supplémentaire consistant à composer, au moyen du terminal fixe, un numéro spécifique de l'opérateur pour provoquer l'envoi des paramètres de configuration.

13. Procédé selon la revendication précédente **caractérisé en ce que** l'étape supplémentaire consistant à composer, au moyen du terminal fixe, un numéro spécifique de l'opérateur pour provoquer l'envoi des paramètres de configuration est mise en oeuvre pour un premier enregistrement de paramètres de configuration dans le terminal fixe.

14. Procédé selon l'une au moins des revendications 1 à 11 **caractérisé en ce qu'**il comporte l'étape supplémentaire consistant à transmettre automatiquement, depuis un serveur spécifique du réseau distant, les paramètres de configuration.

15. Procédé selon la revendication précédente et la revendication 2 ou 3 **caractérisé en ce que** le message de configuration est élaboré au moyen d'un serveur SMSC du réseau distant.

16. Procédé selon l'une au moins des revendications précédentes **caractérisé en ce qu'**il comporte l'étape supplémentaire consistant à émettre depuis le terminal fixe vers le réseau distant, via le réseau téléphonique commuté ou le réseau numérique à intégration de services, un message d'acquittement de réception des paramètres de configuration après réception desdits paramètres.

17. Procédé selon l'une au moins des revendications précédentes **caractérisé en ce qu'**il comporte l'étape supplémentaire (208) consistant à proposer à un utilisateur du terminal fixe, une fois les paramètres de configuration reçus par le terminal fixe, un enregistrement des paramètres de configuration dans un module de mémoire du terminal fixe.

18. Procédé selon la revendication précédente **caractérisé en ce qu'**il comporte l'étape supplémentaire consistant à émettre, le cas échéant, depuis le terminal fixe vers le réseau distant, via le réseau téléphonique commuté ou le réseau numérique à intégration de services, un message d'acquittement d'enregistrement des paramètres de configuration.

19. Procédé selon l'une au moins des revendications précédentes **caractérisé en ce que** le terminal fixe est de type imprimante.
